# EUROPEAN PATENT APPLICATION

(11) **EP 1 955 834 A1**
(43) Date of publication of application: **13.08.2008**
(21) Application number: 06833069.5
(22) Date of filing: 21.11.2006
(51) Int. Cl.: B29C 33/38, B29C 33/02, G11B 7/26, B29L 11/00, B29L 17/00

(54) **MOLD DEVICE AND MIRROR PLATE**

(30) Priority: 29.11.2005 JP 2005344372
(71) Applicant: SUMITOMO HEAVY INDUSTRIES, LTD., Tokyo 141-6025 (JP); SEIKOH GIKEN CO., LTD., Matsudo-shi, Chiba 270-2214 (JP)
(72) Inventor: SAWAISHI, Hiroyuki, Chiba-shi, Chiba 263-0001 (JP); HATTORI, Kazuhiro, Matsudo-shi, Chiba 270-2214 (JP); NIWAKI, Ryohsuke, Matsudo-shi, Chiba 270-2214 (JP)
(74) Representative: Wagner, Karl H.
(86) International application number: PCT/JP2006/323223
(87) International publication number: WO 2007/063747

(57) **Abstract**

An object is to prevent internal stress from remaining in a molded product to thereby improve the quality of the molded product. A mold apparatus (10) includes a first plate and a second plate which is disposed to face the first plate and is made of the same material as that of the first plate. At least one of the first and second plates has voids formed in its surface facing the other plate. Since at least one of the first and second plates has a plurality of voids formed in its surface facing the other plate, a molding material present in a cavity can be prevented from suffering local temperature unevenness. The pattern of a cavity insert can be satisfactorily transferred to a molded product to thereby improve the quality of the molded product. Since the first and second plates are made of the same material, diffusion bonding can be easily conducted. Furthermore, since the first and second plates have the same coefficient of thermal expansion, the mold apparatus (10) can have improved durability.

## Description

### TECHNICAL FIELD

The present invention relates to a mold apparatus and a mirror-surface disc.

### BACKGROUND ART

Conventionally, in an injection molding machine for molding products, resin melted within a heating cylinder is charged into a cavity in a mold apparatus, and is then cooled and hardened in the cavity so as to obtain a molded product.

For such a molding process, the above-mentioned injection molding machine includes a mold apparatus consisting of a stationary mold and a movable mold; an injection apparatus for charging resin into a cavity; and a mold-clamping apparatus for bring the movable mold into contact with the stationary mold and separating the movable mold from the stationary mold. The mold-clamping apparatus is operated so as to advance and retreat the movable mold to thereby close, clamp, and open the mold apparatus. When the mold apparatus is clamped, a cavity is formed between the stationary mold and the movable mold.

The injection apparatus includes a heating cylinder; an injection nozzle attached to the front end of the heating cylinder; and a screw disposed within the heating cylinder so that the screw can rotate and can advance and retreat.

In a metering step, the screw is rotated, whereby resin is melted and accumulated forward of the screw, and the screw is retreated accordingly. During this period, the mold apparatus is closed and clamped. Subsequently, in an injection step, the screw is advanced, whereby the resin accumulated forward of the screw is injected from the injection nozzle and charged into the cavity. In a cooling step, the resin within the cavity is cooled, whereby a molded product is obtained. Subsequently, the mold apparatus is opened, and the molded product is removed therefrom.

Incidentally, in a case where a product having fine projections and depressions on a surface thereof, such as a light guide plate for guiding light from an incident portion to a radiation portion, a grating used for diffracting light, or a disc substrate, is molded, a stamper serving as a cavity insert is attached to a mold body of the stationary mold. A pattern is formed on the stamper by a plurality of pits corresponding to the fine projections and depressions, and with molding, the pattern is transferred to the molded product. In order to prevent the resin charged in the cavity from excessively increasing the temperatures of the stationary mold and the movable mold, temperature control flow passages are formed in the mold bodies of the stationary and the movable molds, and the mold bodies are cooled by means of a medium for temperature control (i.e., temperature control medium) which flows through the temperature control flow passages (see, for example, Patent Document 1).
Patent Document 1: Japanese Patent Application Laid-Open (*kokai*) No. 2002-120264.

### DISCLOSURE OF THE INVENTION

### PROBLEMS TO BE SOLVED BY THE INVENTION

However, in the above-described conventional mold apparatus, since the mold bodies are formed of a metal, they are high in thermal conductivity, so that heat of the resin within the cavity is quickly transferred to the temperature control medium. Accordingly, local temperature unevenness occurs in the resin, and the pattern cannot be satisfactorily transferred to a molded product, with a resultant deterioration in the quality of the molded product.

Further, since heat of the resin within the cavity is quickly transferred to the temperature control medium, the resin hardens quickly, so that internal stress remains within the molded product, and the quality of the molded product deteriorates.

A conceivable measure for preventing quick transfer of heat of resin to the temperature control medium is covering the surfaces of the mold bodies with a thin film formed of resin, ceramic, or the like. However, since the thin film is likely to wear or exfoliate, the durability of the mold bodies lowers.

An object of the present invention is to solve the above-mentioned problem in the conventional mold apparatus and to provide a mold apparatus and a mirror-surface disc, with which a molded product having no residual internal stress and having improved quality can be obtained.

### MEANS FOR SOLVING THE PROBLEMS

To achieve the above object, a mold apparatus according to the present invention comprises a first plate; and a second plate which is disposed to face the first plate and is made of the same material as that of the first plate.

At least one of the first and second plates has a plurality of voids formed in its surface facing the other plate.

### EFFECT OF THE INVENTION

According to the present invention, there is provided a mold apparatus comprising a first plate; and a second plate which is disposed to face the first plate and is made of the same material as that of the first plate.

In the mold apparatus, at least one of the first and second plates has a plurality of voids formed in its surface facing the other plate.

In this case, since at least one of the first and second plates has a plurality of voids formed in its surface facing the other plate, a molding material present in a cavity can be prevented from suffering local temperature unevenness. Therefore, the pattern of a cavity insert can be satisfactorily transferred to a molded product to thereby improve the quality of the molded product.

Further, since the first and second plates are made of the same material, diffusion bonding can be easily conducted. Furthermore, since the first and second plates have the same coefficient of thermal expansion, the durability of the mold apparatus can be improved.

Moreover, since the hardening speed of the molding material can be reduced, internal stress can be prevented from remaining in the molded product, whereby the quality of the molded product can be improved.

### BRIEF DESCRIPTION OF THE DRAWINGS

FIG. 1 is a view showing a main portion of an injection molding machine according to a first embodiment of the present invention.
FIG. 2 is an enlarged view showing a main portion of a mold apparatus according to the first embodiment of the present invention.
FIG. 3 is a sectional view of a mold apparatus according to a second embodiment of the present invention.
FIG. 4 is a sectional view of a mirror-surface disc according to the second embodiment of the present invention.
FIG. 5 is a view showing a first example of a heat transfer adjustment surface in the second embodiment of the present invention.
FIG. 6 is a view showing a second example of the heat transfer adjustment surface in the second embodiment of the present invention.
FIG. 7 is a view showing a third example of the heat transfer adjustment surface in the second embodiment of the present invention.
FIG. 8 is a view showing a fourth example of the heat transfer adjustment surface in the second embodiment of the present invention.
FIG. 9 is a view showing a fifth example of the heat transfer adjustment surface in the second embodiment of the present invention.
FIG. 10 is a graph showing change in resin temperature in the second embodiment of the present invention.
FIG. 11 is an illustration showing the distribution of resin temperature within a cavity in the second embodiment of the present invention.
FIG. 12 is a sectional view of a mold apparatus according to a third embodiment of the present invention.

### DESCRIPTION OF SYMBOLS

10: mold apparatus
16, 36: disc plate
61, 71, 73: first mold plate
65, 72, 74: second mold plate
68: hole
AR1: area

### BEST MODE FOR CARRYING OUT THE INVENTION

Embodiments of the present invention will next be described in detail with reference to the drawings. In this case, an injection molding machine, which is an example molding machine, will be described.

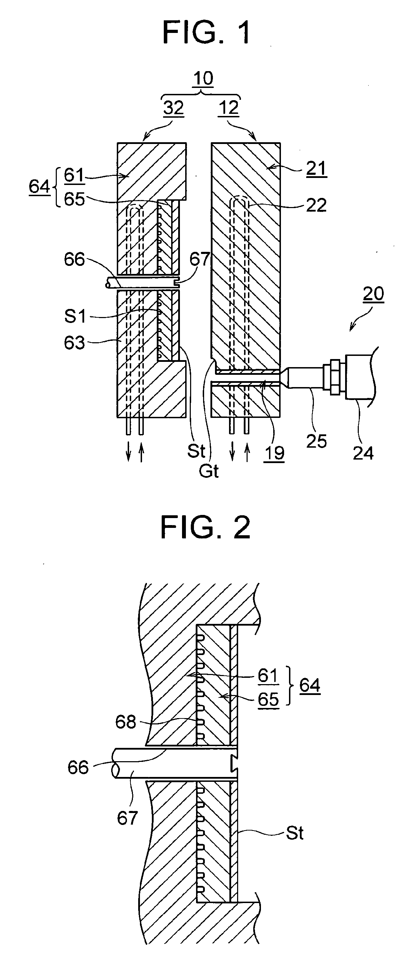

FIG. 1 is a view showing a main portion of an injection molding machine according to a first embodiment of the present invention. FIG. 2 is an enlarged view showing a main portion of a mold apparatus according to the first embodiment of the present invention.

In these drawings, reference numeral 10 denotes a mold apparatus, and 20 denotes an injection apparatus. The mold apparatus 10 includes a stationary mold (a first mold; a stationary-side mold assembly) 12, and a movable mold (a second mold; a movable-side mold assembly) 32, which is disposed to face the stationary mold 12. The injection apparatus 20 includes a heating cylinder (a cylinder member) 24; an injection nozzle (an injection member) 25 attached to the front end of the heating cylinder 24; an unillustrated screw disposed within the heating cylinder 24 so that the screw can rotate and can advance and retreat; a metering motor (a drive section for metering) for rotating the screw; an injection motor (a drive section for injection) for advancing and retreating the screw; etc.

A mold-clamping apparatus is provided so as to close, clamp, and open the mold apparatus 10. The mold-clamping apparatus includes an unillustrated stationary platen, which serves as a first holding member for holding the stationary mold 12; an unillustrated movable platen, which serves as a second holding member for holding the movable mold 32; an unillustrated base plate which is disposed to face the stationary platen with the movable platen intervening therebetween; an unillustrated toggle mechanism disposed between the movable platen and the base plate; an unillustrated mold-clamping motor (a drive section for mold-clamping) for operating the toggle mechanism; etc.

The stationary mold 12 includes a mold body 21 and a runner 19 extending through a predetermined portion of the mold body 21. Resin (molding material) injected from the injection nozzle 25 passes through the runner 19, and is charged into a cavity C, which will be described later, via a gate Gt at the distal end of the runner 19. A temperature control flow passage 22, which is connected with an unillustrated temperature controller, is formed within the mold body 21. A temperature control medium supplied from the temperature controller flows through the temperature control flow passage 22 and cools the mold body 21.

The movable mold 32 includes a mold body 64. This mold body 64 includes a first mold plate (a first plate; a lower plate) 61; and a second mold plate (a second plate; an upper plate) 65, which is disposed on the front face of the first mold plate 61, and stabilizes the temperature of resin charged into the cavity C. The first and second mold plates 61 and 65 are made of a metal (in the present embodiment, stainless steel). A through hole 66 extends through a central portion of the mold body 64, and an ejection rod 67, which serves as an ejection member for ejecting a molded product, is disposed within the through hole 66 such that the ejection rod 67 can advance and retreat.

A temperature control flow passage 63, which is connected with the temperature controller, is formed within the first mold plate 61 so as to extend along the rear surface of the second mold plate 65. The temperature control medium supplied from the temperature controller flows through the temperature control flow passage 63 and cools the mold body 64.

Incidentally, in a case where a product having fine projections and depressions on a surface thereof, such as a light guide plate for guiding light from an incident portion to a radiation portion or a grating used for diffracting light, is molded, in one of the stationary mold 12 and the movable mold 32 (in the present embodiment, in the movable mold 32), a stamper St serving as a cavity insert is attached to the mold body 61. A pattern is formed on the stamper St by a plurality of pits corresponding to the fine projections and depressions of the product, and with molding, the pattern is transferred to the molded product.

In the injection apparatus having the above-described structure, when the toggle mechanism is operated through drive of the mold-clamping motor, the movable platen and the movable mold 32 are advanced, so that the mold apparatus 10 is closed. Further, when the mold-clamping motor is further driven in the forward direction, the toggle mechanism generates a mold-clamping force, which is equal to a value obtained by multiplying the driving force generated by the mold-clamping motor by a toggle magnification ratio. Accordingly, the mold apparatus is clamped with the mold-clamping force. As a result of this mold-clamping operation, the cavity C is formed between the stationary mold 12 and the movable mold 32.

Meanwhile, in the injection apparatus 20, molten resin is accumulated within the heating cylinder 24, and the screw is advanced within the heating cylinder 24. As a result, the resin is injected from the injection nozzle 25 and charged into the cavity C. The resin is then cooled and hardened within the cavity C, whereby the resin becomes a molded product. At that time, the pattern of the stamper St is transferred to the molded product, and thus, fine projections and depressions are formed on the surface of the molded product.

Subsequently, the toggle mechanism is operated through driving of the mold-clamping motor in the reverse direction. As a result, the movable platen and the movable mold 32 are retreated, so that the mold apparatus is opened. At that time, an ejector apparatus is operated so as to advance the ejection rod 67, whereby the molded product is ejected from the movable mold 32. Accordingly; the molded product can be taken out from the mold apparatus 10 by means of operating an unillustrated take-out machine.

Incidentally, in the mold apparatus 10, as described above, the mold body 64 is cooled by a temperature control medium flowing through the temperature control flow passage 63. However, if heat of the resin charged in the cavity C is quickly transferred to the temperature control medium, local temperature unevenness occurs in the resin. In such a case, the pattern cannot be satisfactorily transferred to a molded product, with a resultant deterioration in the quality of the molded product.

Further, if heat of the resin is quickly transferred to the temperature control medium, the resin hardening speed increases, so that internal stress remains within the molded product, and the quality of the molded product deteriorates; e.g., the index of double refraction increases.

In order to overcome such a drawback, as described above, the mold body 64 is composed of the first and second mold plates 61 and 65, and the amount of heat transferred from the resin to the first mold plate 61 and the temperature control medium is adjusted by means of the second mold plate 65. In this case, the first and second mold plates 61 and 65 are made of the same metal material. Notably, the first and second mold plates 61 and 65 are not necessarily required to be made of the same material, and may be made of different materials having the same coefficient of thermal expansion.

In the present embodiment, a mold body thickness, which represents the distance between the rear end surface of the first mold plate 61 and the front end surface of the second mold plate 65, is set to be not less than 15 mm but not greater than 30 mm; and the thickness of the second mold plate 65 is set to be not less than 3 mm but not greater than 10 mm. More preferably, the mold body thickness is set to be not less than 20 mm but not greater than 25 mm; and the thickness of the second mold plate 65 is set to be not less than 5 mm but not greater than 10 mm.

One of the mutually facing surfaces of the first and second mold plates 61 and 65 (in the present embodiment, a surface of the second mold plate 65 facing the first mold plate 61) is used as a heat transfer adjustment surface S1. Fine depressions and projections (in the present embodiment, a plurality of holes 68) are formed on the heat transfer adjustment surface S1 such that they are distributed in a predetermined distribution pattern, whereby a plurality of voids are formed. The density of the voids is set in accordance with the density of the pattern to be transferred.

In this case, the voids are not necessarily required to be formed in the heat transfer adjustment surface S1 of the second mold plate 65, and may be formed in a surface of the first mold plate 61, the surface being in contact with the second mold plate 65. Further, the voids may be formed in both the heat transfer adjustment surface S1 of the second mold plate 65 and the surface of the first mold plate 61 in contact with the second mold plate 65.

Although the holes 68 may be formed by any of various methods, in the present embodiment, they are formed through drilling. When a drill is not moved in relation to the second mold plate 65 during formation of each of the holes 68, each of the holes 68 becomes a circular hole having a circular columnar shape. When the drill is moved in relation to the second mold plate 65 during formation of each of the holes 68, each of the holes 68 becomes a groove. When the holes 68 are formed through drilling, the size of the holes 68 is determined by restrictions associated with drilling. Further, the size of the holes 68 is determined by restrictions associated with the strength of the second mold plate 65. That is, in the case where the holes are circular holes, the diameter (inner diameter) of the holes 68 is set to be not less than 0.1 mm but not greater than 2.0 mm. In the case where the holes are grooves, the width (groove width) of the holes 68 is set to be not less than 0.1 mm but not greater than 2.0 mm. Further, once the inner diameter or the groove width is determined, the depth of the grooves 68 is determined. Table 1 shows the relation between the inner diameter or groove width and the depth.

**[Table 1]**

| [mm] | |
|---|---|
| Inner dia./groove width | Depth |
| 0.1 | 0.1 |
| 0.2 | 0.5 |
| 0.5 | 3.0 |
| 1.0 | 4.5 |
| 2.0 | 5.0 |

As shown in Table 1, when the inner diameter or the groove width is 0.1 mm, the depth is set to 0.1 mm or less; when the inner diameter or the groove width is 0.2 mm, the depth is set to 0.5 mm or less; when the inner diameter or the groove width is 0.5 mm, the depth is set to 3.0. mm or less; when the inner diameter or the groove width is 1.0 mm, the depth is set to 4.5 mm or less; and when the inner diameter or the groove width is 2.0 mm, the depth is set to 5.0 mm or less. Thus, the depth of the holes 68 can be increased with the inner diameter or the groove width. In the case where the holes 68 are circular holes, the holes 68 may assume the form of a circular cone rather than the form of a cylindrical column.

After formation of the holes 68 in the heat transfer adjustment surface S1, heat and pressure are applied to the first and second mold plates 61 and 65 with the heat transfer adjustment surface S1 positioned inside, so that the first and second mold plates 61 and 65 are bonded together; specifically, are diffusion-bonded together. As a result, the first and second mold plates 61 and 65 are united, so that the mold body 64 is formed. Notably, in place of diffusion bonding, other fixing methods such as welding, brazing, and bolting may be used.

As described above, in the present embodiment, the plurality of holes 68 are formed in the heat transfer adjustment surface S1 formed between the cavity C and the temperature control flow passage 63. Therefore, the heat of resin charged into the cavity C is transferred to the second mold plate 65, and then transferred to the first mold plate 61 after passing through the holes 68 in the heat transfer adjustment surface S1. At that time, each hole (void) 68 serves as a heat insulating material, and adjusts the heat transfer (i.e., the amount of heat transferred) from the second mold plate 65 to the first mold plate 61.

Accordingly, since generation of local temperature unevenness in the resin within the cavity C can be prevented, the pattern can be satisfactorily transferred to a molded product, whereby the quality of the molded product can be improved.

Further, since the first and second mold plates 61 and 65 are made of the same metal material, diffusion bonding can be easily conducted. Furthermore, since the first and second mold plates 61 and 65 have the same coefficient of thermal expansion, when the temperatures of the first and second mold plates 61 and 65 change after unification of the first and second mold plates 61 and 65 for formation of the mold body 64, the first and second mold plates 61 and 65 expand and contract in the same manner.

Accordingly, generation of distortion in the mold body 64 can be prevented, and the durability of the mold body 64 and the mold apparatus 10 can be improved. Further, the surface of the second mold plate 65 becomes unlikely to deform, whereby the quality of molded products can be improved.

Moreover, since the heat of resin is gradually transferred to the temperature control medium, the hardening speed of resin can be reduced.

As described above, in the present embodiment, through provision of the second mold plate 65, the hardening speed of resin can be reduced. Thus, the resin temperature can be maintained high until 0.5 sec elapses after the resin has been charged into the cavity C. Accordingly, internal stress can be prevented from remaining within a molded product, and the quality of the molded product can be improved. In addition, since the resin temperature becomes lower than 150°C within a short period of time, the molded product can be removed early. Accordingly, the molding cycle can be shortened.

Notably, since the first and second mold plates 61 and 65 are formed of the same materials or different materials having the same coefficient of thermal expansion, occurrence of a crack at the bonded portions of the first and second mold plates 61 and 65 can be prevented.

Next, there will be described a second embodiment of the present invention in which a disc substrate serves as a molded product.

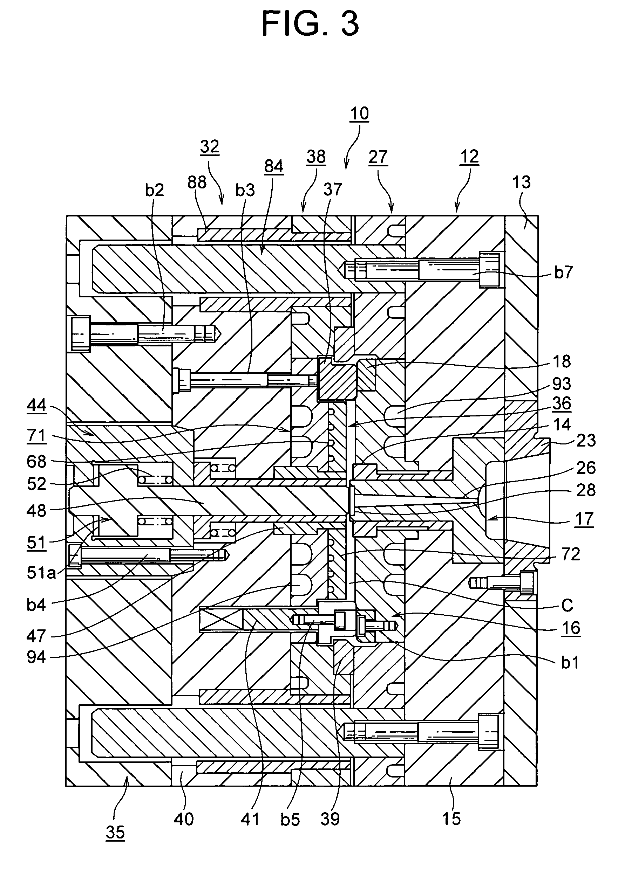

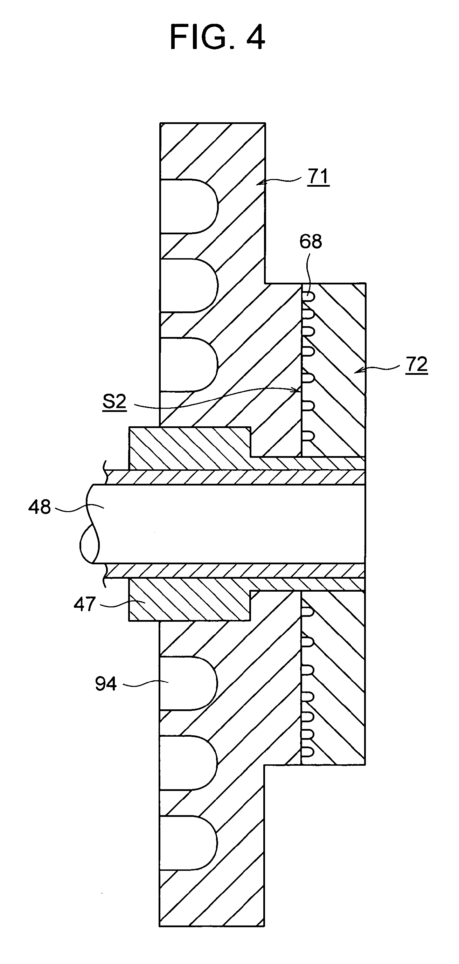

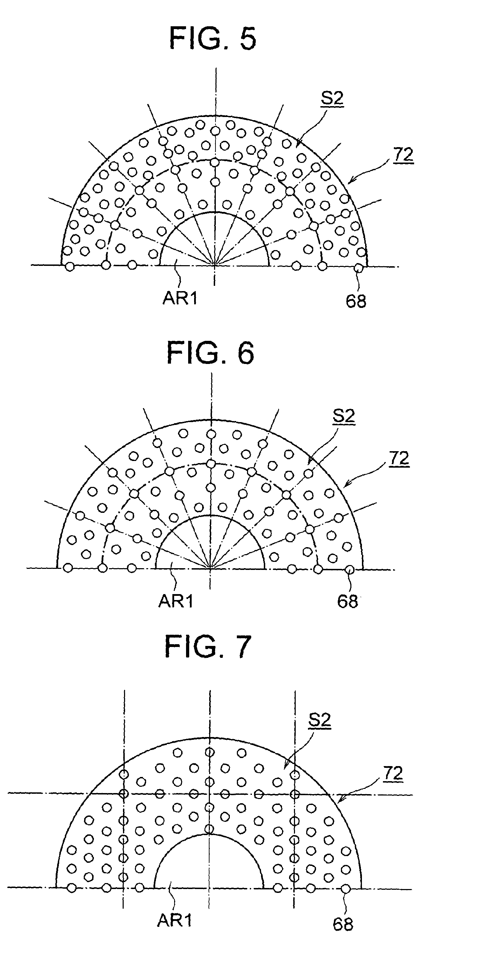

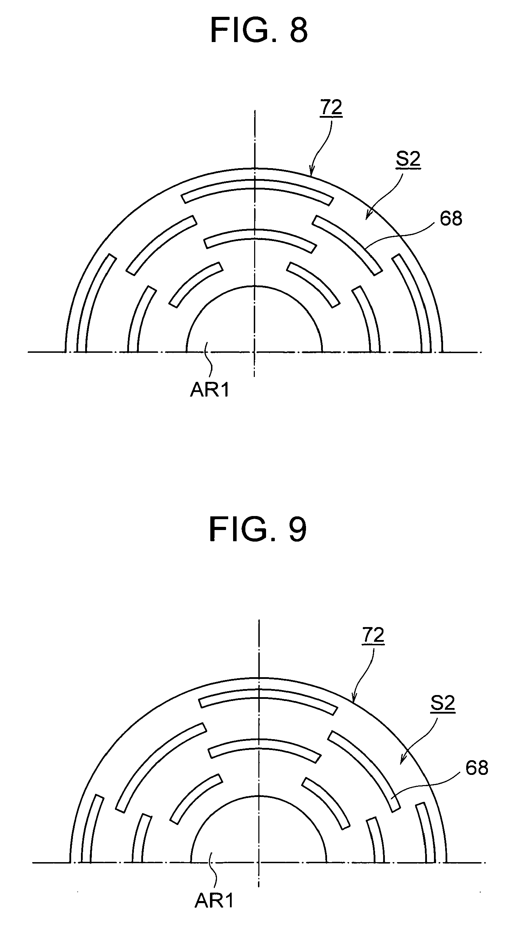

FIG. 3 is a sectional view of a mold apparatus according to the second embodiment of the present invention. FIG. 4 is a sectional view of a mirror-surface disc according to the second embodiment of the present invention. FIG. 5 is a view showing a first example of a heat transfer adjustment surface in the second embodiment of the present invention. FIG. 6 is a view showing a second example of the heat transfer adjustment surface in the second embodiment of the present invention. FIG. 7 is a view showing a third example of the heat transfer adjustment surface in the second embodiment of the present invention. FIG. 8 is a view showing a fourth example of the heat transfer adjustment surface in the second embodiment of the present invention. FIG. 9 is a view showing a fifth example of the heat transfer adjustment surface in the second embodiment of the present invention.

In these drawings, reference numeral 12 denotes a stationary mold (a first mold; a stationary-side mold assembly) attached to an unillustrated stationary platen via an attachment plate 13. The stationary mold 12 includes a base plate (a first support plate) 15; a disc plate (a first mirror-surface disc) 16 having a circular shape and attached to the base plate 15 by means of unillustrated bolts; a locating ring 23 disposed in the base plate 15 in such a manner as to face the stationary platen and adapted to position the base plate 15 with respect to the stationary platen; and a sprue bush 17 disposed adjacent to the locating ring 23. The base plate 15 and the disc plate 16 function as a first mold body.

A die 28 is formed at the front end of the sprue bush 17 so that the die faces a cavity C. A sprue 26 is formed in the sprue bush 17 and communicates with the die 28. Resin (molding material) injected from the injection nozzle 25 (FIG. 1) passes through the sprue 26. A stamper-holding bush 14 is disposed radially outward of a front half portion of the sprue bush 17. The stamper-holding bush 14 serves as a holding member for holding an inner circumferential edge of a stamper St, which serves as a cavity insert. Notably, an unillustrated air blow bush, etc. are also provided in the stationary mold 12.

Further, an annular abutment ring 18 is attached to the outer circumferential edge of the disc plate 16 by means of a bolt b1, and an annular first peripheral ring 27 is disposed on the radially outer side of the disc plate 16 and the abutment ring 18 and attached to the base plate 15. Notably, the disc plate 16 is positioned in relation to the first peripheral ring 27.

Meanwhile, reference numeral 32 denotes a movable mold (a second mold; a movable-side mold assembly) attached to an unillustrated movable platen. The movable mold 32 includes a base plate 35; an intermediate plate (a second support plate) 40 having a circular shape and attached to the base plate 35 by means of a bolt b2; a disc plate (a second mirror-surface disc) 36 attached to the intermediate plate 40 by means of a bolt b3; a cylinder 44 which is disposed within the base plate 35 such that the cylinder 44 faces the movable platen and is attached to the intermediate plate 40 by means of a bolt b4; and a cut punch 48 which is advanced and retreated along the cylinder 44 and has a shape corresponding to the die 28. Notably, the base plate 35, the disc plate 36, and the intermediate plate 40 function as a second mold body.

The disc plate 36 includes a first mold plate (a first plate; a lower plate) 71; and a second mold plate (a second plate; an upper plate) 72, which is disposed on the front face of the first mold plate 71, and stabilizes the temperature of resin charged into the cavity C. The first and second mold plates 71 and 72 are united through diffusion bonding.

An annular cavity ring 37 is disposed along the outer circumferential edge of the disc plate 36 and in opposition to the abutment ring 18. A second peripheral ring 38 is disposed radially outward of the disc plate 36 and the cavity ring 37 and in opposition to the first peripheral ring 27, and is attached to the intermediate plate 40. Notably, the disc plate 36 is positioned in relation to the second peripheral ring 38. The cavity ring 37 is attached to a rod 41 by means of a bolt b5, and disposed such that it can move in relation to the intermediate plate 40 via the rod 41. A cavity-ring holder 39 is in engagement with the outer circumferential edge of the cavity ring 37, and is attached to the second peripheral ring 38 by means of an unillustrated bolt. The cavity ring 37 projects from the front end surface of the disc plate 36. The inner circumferential surface of the cavity ring 37 forms the outer circumferential edge of a disc substrate.

A flange 51 formed integrally with the cut punch 48 is disposed within the cylinder 44 such that it can advance and retreat. The rear end 51a of the flange 51 is received by the above-described cylinder 44. Further, a cut-punch return spring 52 is disposed ahead of the flange 51. The cut-punch return spring 52 urges the flange 51 rearward.

Accordingly, when the flange 51 is advanced in a mold clamped state by supply of oil to an unillustrated drive cylinder, the cut punch 48 is caused to advance and enter the die 28. As a result, a hole can be formed in the resin within the cavity C, whereby inner-diameter punching of a disc substrate can be performed. Notably, an unillustrated ejector bush for ejecting the disc substrate is disposed radially outward of a front half portion of the cut punch 48; and an air blow bush 47 for jetting compressed air to the disc substrate so as to release the disc substrate from the disc plate 36 is disposed radially outward of the ejector bush. Further, an unillustrated ejector pin and other components are disposed within the movable mold 32.

Notably, guide posts 84 are attached, through press fitting, to the first peripheral ring 27 such that they are arranged along a circle concentric with the stationary mold 12 and project toward the movable mold 32, and are connected to the base plate 15 by means of bolts b7. Meanwhile, guide bushes 88, which serve as guide members, are attached to the second peripheral ring 38 and the intermediate plate 40. The guide bushes 88 can guide the guide posts 84.

First and second temperature control flow passages 93 and 94 are formed in the disc plates 16 and 36, respectively, and a temperature control medium is supplied to the first and second temperature control flow passages 93 and 94, whereby the disc plates 16 and 36 are cooled.

Incidentally, the second mold plate 72 is disposed to adjust the amount of heat transferred from resin to the first mold plate 71 and the temperature control medium, as in the first embodiment.

In the present embodiment, a mold body thickness, which represents the distance between the rear end surface of the first mold plate 71 and the front end surface of the second mold plate 72, is set to be not less than 20 mm but not greater than 25 mm; and the thickness of the second mold plate 72 is set to be not less than 3 mm but not greater than 10 mm.

One of the mutually facing surfaces of the first and second mold plates 71 and 72 (in the present embodiment, a surface of the second mold plate 72 facing the first mold plate 71) is used as a heat transfer adjustment surface S2. A plurality of holes 68 are formed in the heat transfer adjustment surface S2.

In this case, in first through third examples shown in FIGS. 5 to 7, when the holes 68 are formed, drilling is performed without a drill being moved in relation to the second mold plate 72, so that each of the holes 68 becomes a circular hole having a circular columnar shape. The inner diameter of each hole 68 is determined to fall within a range of 1 to 2 mm, and the depth of each hole 68 is determined in accordance with the inner diameter as shown in Table 1.

The holes 68 are formed in a distributed pattern such that, in the first example, the density of the holes increases from the inner side toward the outer side in the radial direction; in the second example, the density of the holes becomes uniform in the radial direction and the circumferential direction (r-φ direction); and, in the third example, the density of the holes becomes uniform in the horizontal direction and the vertical direction (x-y direction).

In fourth and fifth examples shown in FIGS. 8 and 9, when the holes 68 are formed, drilling is performed while a drill is moved in relation to the second mold plate 72, so that each of the holes 68 becomes a groove. The groove width of each hole 68 is determined to fall within a range of 1 to 2 mm, and the depth of each hole 68 is determined in accordance with the groove width as shown in Table 1.

In the fourth example, the holes 68 are formed in a distributed pattern such that the holes are arranged concentrically. In the fifth example, the holes 68 are formed in a distributed pattern such that the holes are arranged spirally. Notably, the groove length of each hole 68 is set arbitrarily.

In the first through fifth examples, since the holes 68 are formed discretely, heat insulating effects of the individual holes 68 can be made uniform. Accordingly, the amount of heat transferred from the second mold plate 72 to the first mold plate 71 can be adjusted more satisfactorily, whereby generation of local temperature unevenness in resin can be prevented.

Notably, in FIGS. 5 to 9, AR1 denotes an area which becomes a clamp area when a disc substrate is formed. The area AR1 is formed to extend from the center of the disc substrate to a radial position which is 30 to 35 mm away from the center. The holes 68 are not formed in the area AR1. Therefore, in the area AR1, the heat of resin is transferred to the temperature control medium relatively quickly, whereby the hardening speed of resin can be increased. Accordingly, the index of double refraction of the disc substrate can be improved.

Notably, in the above-described embodiments, the holes 68 are formed over the entirety of the second mold plate 65 or 72. However, the distribution of the holes 68 can be arbitrarily set in accordance with the shape of the cavity C.

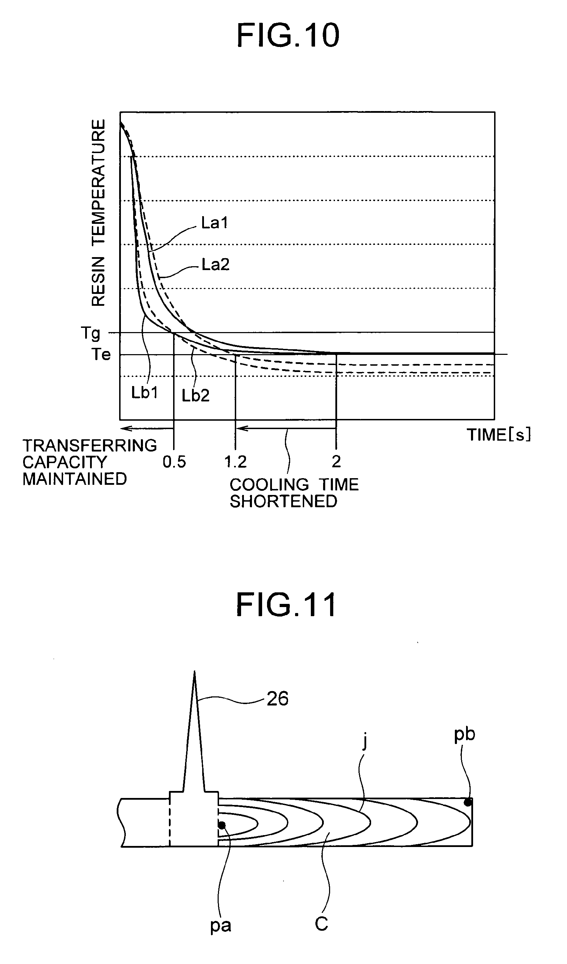

FIG. 10 is a graph showing change in resin temperature in the second embodiment of the present invention. FIG. 11 is an illustration showing the distribution of resin temperature within a cavity in the second embodiment of the present invention. In FIG. 10, the horizontal axis represents time, and the vertical axis represents resin temperature.

In FIG. 11, C denotes a cavity; 26 denotes a sprue; j denotes an isothermal line; pa denotes a position at the center of the inner circumference wall of the cavity C; and pb denotes a position on the outer circumferential wall of the cavity C.

In FIG. 10, La1 denotes a curve showing change in resin temperature at the position pa when the second mold plate 72 (FIG. 4) is not provided; Lb1 denotes a curve showing change in resin temperature at the position pb when the second mold plate 72 is not provided; La2 denotes a curve showing change in resin temperature at the position pa when the second mold plate 72 is provided; Lb2 denotes a curve showing change in resin temperature at the position pb when the second mold plate 72 is provided; Te denotes a limit temperature under which a molded product can be removed from the cavity C; i.e., a product removable temperature; and Tg denotes a glass transition temperature of resin (150°C). FIG. 10 shows the temperature of resin whose temperature was 380°C when charged in the cavity C.

Incidentally, when the mold apparatus 10 in which the second mold plate 72 is provided is used, the temperature of the temperature control medium is set lower than that in the case where the second mold plate 72 is not provided. However, since the amount of heat transferred from the second mold plate 72 to the first mold plate 71 is adjusted, the resin temperature at the position pb is prevented from dropping sharply. That is, even in the case where the temperature of the temperature control medium is set lower than that in the case where the second mold plate 72 is not provided, the resin temperature at the position pb can be prevented from becoming lower than the glass transition temperature Tg before 0.5 sec elapses after charging of resin into the cavity C, as in the case where the second mold plate 72 is not provided. Accordingly, quick hardening of resin charged into the cavity C can be suppressed, and pattern transfer capability can be maintained.

In contrast, at the position pa, the resin temperature can be lowered rapidly, because the temperature of the temperature control medium is set to a low temperature. Accordingly, the resin can be hardened to a sufficient degree, whereby warpage of a molded product can be prevented, and the quality of the molded product can be improved. Notably, whereas the resin temperature at the position pa requires about 2 sec to become lower than the product removable temperature in the case where the second mold plate 72 is not provided, the resin temperature at the position pa requires about 1.2 sec to become lower than the product removable temperature in the case where the second mold plate 72 is provided. Accordingly, even when the temperature of the temperature control medium is lowered to thereby lower the temperature of the mold apparatus 10, the pattern can be transferred. Accordingly, the molding cycle can be shortened.

Next, a third embodiment of the present invention will be described. Like structural elements of the second embodiment are denoted by like reference numerals, and repeated description thereof is omitted. For the effect that the third embodiment yields through employment of structural elements similar to those of the second embodiment, the effect that the second embodiment yields is applied accordingly.

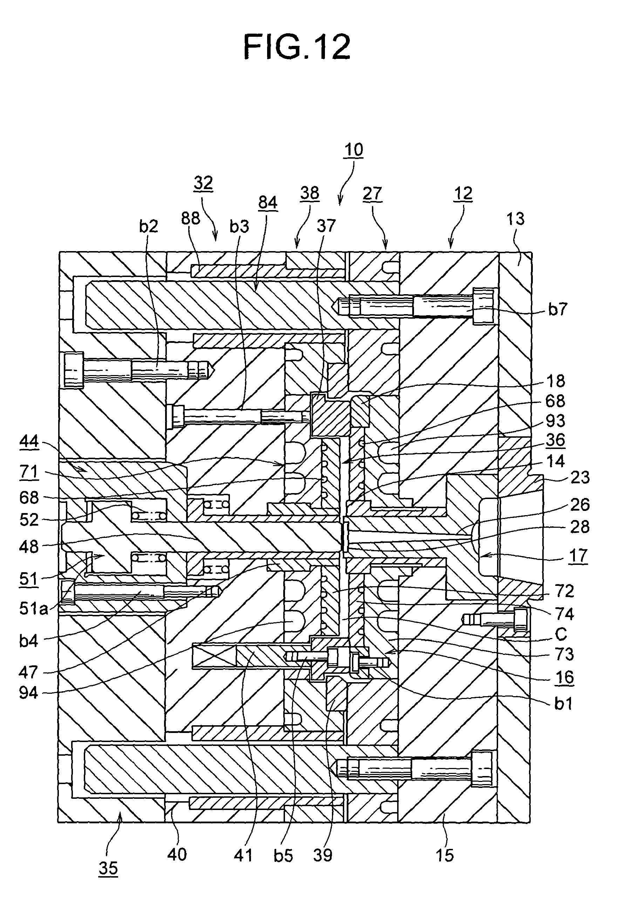

FIG. 12 is a sectional view of a mold apparatus according to the third embodiment of the present invention.

In this case, a disc plate 16, which serves as a first mirror-surface disc, includes a first mold plate (a first plate; a lower plate) 73; and a second mold plate (a second plate; an upper plate) 74, which is disposed on the front face of the first mold plate 73, and stabilizes the temperature of resin charged into the cavity C. The first and second mold plates 73 and 74 are united through diffusion bonding. One of the mutually facing surfaces of the first and second mold plates 73 and 74 (in the present embodiment, a surface of the second mold plate 74 facing the first mold plate 73) is used as a heat transfer adjustment surface. A plurality of holes 68 are formed in the heat transfer adjustment surface. Moreover, a plurality of holes 68 are formed in a stationary-side mold assembly 12 having a similar structure.

In this case, an unillustrated stamper, which serves a cavity insert, is attached in front of the second mold plate 74. Therefore, the heat of resin charged into the cavity C is transferred to the second mold plate 74 via the stamper, and then transferred to the first mold plate 73 after passing through the holes 68 in the heat transfer adjustment surface. At that time, each hole (void) 68 serves as a heat insulating material, and adjusts the amount of heat transferred from the second mold plate 74 to the first mold plate 73.

In the above-described embodiments, the stamper is disposed on the stationary mold 12 side; however, the stamper may be disposed on the movable mold 32 side.

In the present embodiment, as shown in FIG. 12, the stamper is attached to the stationary-side mold assembly 12; and the plurality of holes 68 are formed in both the mold assemblies 12 and 32. However, the holes 68 may be formed in one of the mold assemblies 12 and 32. In this case, the holes 68 are formed in a mold assembly on which the stamper is provided.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to mold apparatuses for injection molding machines.

## Claims

1. A mold apparatus comprising:
(a) a first plate; and
(b) a second plate which is disposed to face the first plate and is made of the same material as that of the first plate, wherein
(c) at least one of the first and second plates has a plurality of voids formed in its surface facing the other plate.

2. A mold apparatus according to claim 1, wherein the voids are formed discretely.

3. A mold apparatus according to claim 2, wherein the voids have a cylindrical columnar shape.

4. A mold apparatus according to claim 2, wherein the voids are formed by grooves.

5. A mold apparatus according to claim 2, wherein the voids extend along concentric circles or spirally with respect to the center of the plate.

6. A mold apparatus according to claim 2, wherein the voids have an internal diameter or groove width of 0.1 mm to 2.0 mm, inclusive.

7. A mold apparatus according to claim 1, wherein the first plate or the second plate which is located on the side toward a cavity has a thickness of 3 mm to 10 mm, inclusive.

8. A mold apparatus according to claim 1, wherein the voids are formed such that the density of the voids increases from the inner side toward the outer side with respect to the radial direction of the plate.

9. A mold apparatus according to claim 1, adapted to mold a disc substrate, wherein the voids are not formed in an area of the plate, the area serving as a clamp area when the disc substrate is formed.

10. A mold apparatus according to claim 1, wherein the density of the voids is set in accordance with the density of a pattern to be transferred.

11. A mirror-surface disc comprising:
(a) a first plate; and
(b) a second plate which is disposed to face the first plate and is made of the same material as that of the first plate, wherein
(c) at least one of the first and second plates has a plurality of voids formed in its surface facing the other plate.
